# EUROPEAN PATENT SPECIFICATION

(11) **EP 3 285 201 B1**
(45) Date of publication and mention of the grant of the patent: **15.04.2020**
(21) Application number: 17186860.7
(22) Date of filing: 18.08.2017
(51) Int. Cl.: G06K 7/10

(54) **READING DEVICE AND CONTROL PROGRAM FOR READING DEVICE**
LESEVORRICHTUNG UND STEUERUNGSPROGRAMM FÜR LESEVORRICHTUNG
DISPOSITIF DE LECTURE ET PROGRAMME DE COMMANDE POUR DISPOSITIF DE LECTURE

(30) Priority: 19.08.2016 JP 2016161265
(43) Date of publication of application: 21.02.2018
(73) Proprietor: Toshiba TEC Kabushiki Kaisha, Tokyo 141-8562 (JP)
(72) Inventor: SUZUKI, Shigeaki, Shinagawa-ku,, Tokyo 141-8562 (JP)
(74) Representative: Bandpay & Greuter

(56) References cited:
- EP-A1- 2 808 831
- EP-A2- 1 873 682
- US-A1- 2015 302 708

## Description

### FIELD

The present invention relates to a tag information reading technology in general, and embodiments described herein relate in particular to a reading device and a control program for a reading device.

### BACKGROUND

In the related art, a reading device reads tag information stored in a wireless tag (e.g., a Radio Frequency Identification (RFID) tag) attached to merchandise. By way of example only, US 2015/302708 A1 discloses a self-checkout apparatus comprising a reading module configured to read information of a wireless tag from a commodity, EP 2808831 A1 discloses a scanning apparatus to scan articles stored in a shelf, and EP 1873682 A2 discloses a system for obtaining information from objects provided with bar codes and RFID tags.

In an existing reading device having a moving antenna for reading tag information, power supplied from the antenna to the wireless tag may be insufficient or the antenna moves before the tag information has been read, causing failures in the reading of the wireless tag. In a reading device having a fixed antenna, a reading device may fail to read tag information due to the distance between the antenna and the wireless tag being too great.

To solve such problems, there is provided a wireless tag reading device, comprising:
an antenna for transmitting wireless signals to a wireless tag to initiate reading of information stored in the wireless tag;
a moveable stage connected to the antenna and configured to move the antenna from a first location to a second location during a reading process for reading the information from the wireless tag; and
a controller configured to determine whether information has been received from the wireless tag during the reading process with the moveable stage at a first location,
characterized in that the controller is further configured to:
   count and store a number of times the wireless signals are transmitted from the antenna without receiving any information from the wireless tag while the antenna remains at the first location, and
   move the moveable stage from the first location to the second location while transmitting the wireless signals if the stored number of times equals a predetermined number.

Preferably, the reading device further comprises:
a wireless tag reader electrically coupled to the antenna to supply signals to the antenna and receive signals from the antenna that are used in reading the information from the wireless tag during the reading process.

In the above reading device, the wireless tag reader preferably supplies signals to the antenna and receives signals from the antenna while the moveable stage is in motion between the first location and the second location.

Also in the above reading device, the wireless tag reader preferably supplies signals to the antenna and receives signals from the antenna when the moveable stage is stationary at the first location and the second location.

Suitably, the moveable stage has a movement range along a first direction from a first end to a second end, and the first position is at a middle portion of the movement range between the first and second ends along the first direction.

Suitably still, the controller is configured to:
transmit to the wireless tag, via the antenna, flag information to be stored in the wireless tag indicating completion of a settlement process,
determine whether or not the flag information has been stored in the wireless tag according to reception, via the antenna, of a response signal from the wireless tag, and
move the moveable stage when the response signal from the wireless tag has not been received after a transmission of the flag information to the wireless tag.

Suitably yet, the wireless tag is an RFID tag.

Suitably further, the device further comprises:
a check-out counter upon which an article of merchandise can be placed, wherein
the antenna and the moveable stage are disposed below the check-out counter.

Typically, the device further comprises:
a point-of-sale terminal configured to receive the information read from the wireless tag during the reading process, wherein
the wireless tag is attached to the article of merchandise.

The invention further relates to a non-transitory computer readable medium storing program instructions that when executed by a wireless tag reading device causes:
an antenna to transmit wireless signals to a wireless tag to initiate reading of information stored in the wireless tag; and
a moveable stage connected to the antenna to move the antenna from a first location to a second location during a process for reading the information from the wireless tag if information has not been received from the wireless tag with the moveable stage at the first location after elapse of a predetermined time period or a completion of a predetermined number of reading attempts.

Typically, the non-transitory computer readable medium further includes program instructions that when executed by the wireless tag reading device cause:
the antenna to transmit signals to the wireless tag while the moveable stage is in motion between the first location and the second location.

### BRIEF DESCRIPTION OF THE DRAWINGS

The above and other objects, features and advantages of the present invention will be made apparent from the following description of the preferred embodiments, given as non-limiting examples, with reference to the accompanying drawings, in which:
Fig. 1 is an exterior perspective view of a reading device and a POS terminal according to an embodiment.
Fig. 2 is a diagram viewed along the arrow A in Fig. 1 and a schematic side view illustrating a configuration of a reading device.
Fig. 3 is a block diagram illustrating hardware aspects of a point-of-sale (POS) terminal.
Fig. 4 is a block diagram illustrating hardware aspects of a reading device.
Fig. 5 is a flowchart illustrating a control processing executed by a POS terminal according to an embodiment.
Fig. 6 is a block diagram illustrating functional aspects of a reading device.
Fig. 7 is a flowchart illustrating a reading process of tag information executed by a reading device according to an embodiment.
Fig. 8 is a flowchart illustrating a writing process to a wireless tag executed by a reading device according to an embodiment.

### DETAILED DESCRIPTION

In general, according to one embodiment, a wireless tag reading device, comprises an antenna for transmitting wireless signals to a wireless tag so as to initiate reading of information stored in the wireless tag and a moveable stage connected to the antenna and configured to move the antenna from a first location to a second location during a reading process for reading the information from the wireless tag. A controller is configured to determine whether information has been received from the wireless tag during the reading process with the moveable stage at a first location, and to move the moveable stage from the first location to the second location if the information has not been received from the wireless tag during the reading process with the moveable stage at the first location.

Hereinafter, a reading device and a control program according to an example embodiment will be described with reference to drawings. In the example embodiment, an article of merchandise M being sold at a store will be described as an example of a tagged article. The reading device receives and reads tag information stored in a wireless tag (e.g., RFID tag) that is attached to the merchandise M. The tag information includes a tag Identification (ID) specifying a wireless tag and a merchandise code specifying the merchandise M. The reading device also transmits and writes information to the wireless tag (e.g., an RFID tag) attached to the merchandise M indicating that settlement processing of the merchandise M has been performed.

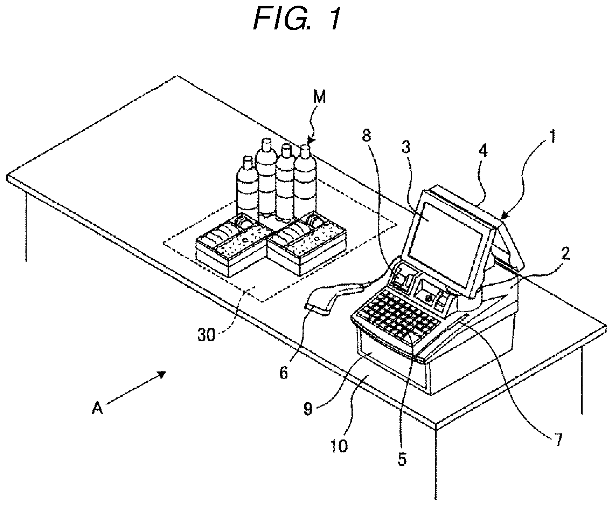

Fig. 1 is an exterior perspective view of a reading device 30 and a point-of-sale (POS) terminal 1 that are provided in a check-out counter 10. The POS terminal 1 is installed in a store such as a supermarket or the like and performs sales registration processing and settlement processing related to an article of the merchandise M being purchased by a customer. The reading device 30 reads tag information stored in the wireless tag attached to the merchandise M. The reading is performed using a radio wave in a non-contact manner.

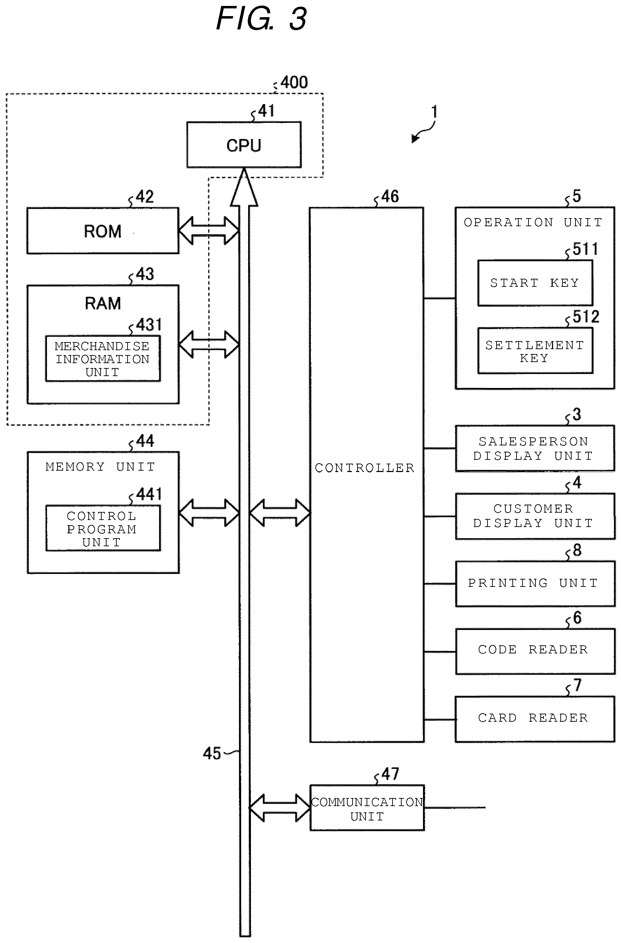

The sales registration processing is a process of obtaining a merchandise code related to the merchandise M being sold, then displaying merchandise information such as a merchandise name and/or a price) based on the merchandise code, and storing the merchandise information in merchandise information unit 431 (see Fig. 3). The settlement processing is a process of: displaying a total amount of money due according to the merchandise information stored in the merchandise information unit 431 by the sales registration processing and then calculating and displaying an amount of change due to a customer based on the amount tendered by the customer; instructing a change dispenser to issue the amount of change due; and issuing a receipt on which the merchandise information and settlement information (e.g., the total amount of money due in the sales transaction, a tendered amount, a change due amount, and the like) are printed, and the like.

As illustrated in Fig. 1, the POS terminal 1 includes a main body 2, a salesperson display unit 3, a customer display unit 4, an operation unit 5, a code reader 6, a card reader 7, a printer 8, and a drawer 9. The POS terminal 1 is electrically connected to the reading device 30. The configuration of the reading device 30 will be described later.

The main body 2 includes a controller 400, a memory unit 44 (see Fig. 3), and a power supply unit (not specifically illustrated) therein.

The salesperson display unit 3 is provided on an upper part of the main body 2 towards a salesperson side of the check-out counter 10. The salesperson display unit 3 displays merchandise information such as a name and a price of the merchandise M read by the code reader 6.

The customer display unit 4 is attached on a customer side of the check-out counter 10 while facing a back surface to the salesperson display unit 3. The customer display unit 4 displays merchandise information such as a name and a price of the merchandise M read by the code reader 6.

The operation unit 5 includes a key such as a settlement key for declaring an end of sales registration processing of merchandise M being purchased by a customer. If the salesperson display unit 3 may have a function of a touch panel capable of recognizing an instruction by a salesperson's pressing of keys or buttons, the touch panel corresponds to the operation unit 5.

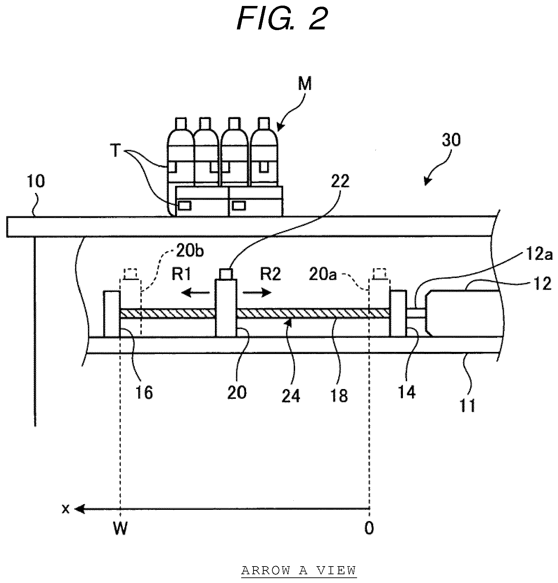

The code reader 6 is a device which optically reads a code symbol, such as a bar code or a two-dimensional code, attached to each piece of the merchandise M and is disposed so as to be used at a central portion of the check-out counter 10. The code symbol provides information such as a merchandise code which specifies merchandise and is assigned to each piece of merchandise M in advance. Either a wireless tag T (see Fig. 2) or a code symbol (e.g., a bar code) is affixed to each piece of merchandise M. Hereinafter, the reading device 30 according to the embodiment will be described. A detailed description of aspects of a reading process of the code symbol by the code reader 6 will be omitted.

The card reader 7 magnetically or electrically reads information of customer's a point card (e.g., a customer loyalty card) or a credit card inserted in a card insertion slot.

The printer 8 prints merchandise information and settlement information related to the merchandise M on receipt paper. The printing unit 8 issues a receipt on which the merchandise information and the settlement information has been printed.

The drawer 9 includes a drawer capable of opening and closing and accommodating cash, securities, and the like. A salesperson stores cash and securities tendered from a customer in the drawer 9. The salesperson takes out change due from the drawer 9 and hands the change to the customer together with a receipt.

Next, the configuration of the reading device 30 will be described. Fig. 2 is a side view (viewed along the arrow A in Fig. 1) illustrating a schematic configuration of the reading device 30. The reading device 30 is installed on an opposite side of a surface of the check-out counter 10 on which a customer places merchandise M. The reading device 30 faces a placement position of the merchandise M on a top board of the check-out counter 10.

The reading device 30 reads tag information stored in a wireless tag attached to the merchandise M. In the present example, the wireless tag T is an RFID tag operating in a UHF band. The reading device 30 includes an antenna 22. As illustrated in Fig. 2, the antenna 22 is inside the check-out counter 10. The antenna 22 is, for example, a planar patch antenna, and has a surface facing the top board of the check-out counter 10.

The reading device 30 transmits radio waves from the antenna 22. The reading device 30 receives tag information transmitted from the wireless tag T via the antenna 22.

Specifically, the reading device 30 transmits radio waves, including instruction to transmit tag information, to the wireless tag T via the antenna 22. The wireless tag T receiving the radio waves transmits tag information (such as a tag ID for specifying particular tags and a merchandise code for identifying merchandise M to which the wireless tag T is attached) from the wireless tag T attached to the merchandise M stored therein in advance, to the reading device 30. The reading device 30 receives the tag information from the wireless tag T via the antenna 22 and stores the received tag information. In addition, the reading device 30 transmits writing information indicating a completion of the settlement processing together with a tag ID to the wireless tag T via the antenna 22. The wireless tag T corresponding to the tag ID receives the writing information, and stores the writing information in the wireless tag T. When the writing ends, the wireless tag T transmits response information indicating that the writing information is stored to the reading device 30. The reading device 30 receives the response information. The reading device 30 receiving the response information recognizes that the transmitted writing information has been written to the tag ID.

In Fig. 2, the antenna 22 emits a radio wave toward a top board of the check-out counter 10. The top board allows radio waves to pass therethrough and is made of, for example, wood. The reading device 30 has a radio wave coverage area in which the wireless tag T can be read. As illustrated in Fig. 2, a customer places the merchandise M to be purchased in the reading area on the check-out counter 10 directly above the antenna 22. Alternatively, the customer may place a shopping basket (not specifically depicted) containing the merchandise M on the check-out counter 10 above the antenna 22. The reading device 30 collectively receives and stores tag information stored in the wireless tags T attached to the merchandise M placed in the reading area.

The antenna 22 is installed on a moving mechanism 24 disposed under the check-out counter 10. The antenna 22 so installed is thus able to move in parallel along the top board of the check-out counter 10.

The moving mechanism 24 includes a linear motion mechanism having a screw shaft 18, a bearing 16 of the screw shaft 18, a stepping motor 12, a coupling 14, and a moveable stage 20. The stepping motor 12 is a rotational power source. The coupling 14 transmits rotational power of the stepping motor 12 to the screw shaft 18. The moveable stage 20 is integrated with a ball screw nut screwed to the screw shaft 18. The antenna 22 is fixed on the moveable stage 20.

One end of the screw shaft 18 is horizontally supported by the bearing 16 and the other end of the screw shaft 18 is horizontally supported by the coupling 14, so that the screw shaft 18 is rotatable about a horizontal axis (x-axis in Fig. 2). An output shaft 12a of the stepping motor 12 is connected with the other end of the screw shaft 18 in the coupling 14. With this configuration, rotation power of the stepping motor 12 is transmitted from the output shaft 12a to the screw shaft 18 via the coupling 14.

The moveable stage 20 has a through hole in a main body thereof and the ball screw nut of the screw shaft 18 is embedded in the through hole. The moveable stage 20 can move along an axial direction of the screw shaft 18 as the screw shaft 18 rotates. That is, the moveable stage 20 moves in the directions of the arrow R1 and the arrow R2 in Fig. 2 along the x-axis. Since a metallic ball (e.g., a steel ball bearing) is interposed in the threaded portion between the screw shaft 18 and the ball screw nut during movement, the moveable stage 20 can move smoothly. It is assumed that the moveable stage 20 moves along the x-axis between x = 0 and x = W. The distance between x = 0 and x = W can be referred to as a movement range or range of the moveable stage 20. That is, the moveable stage 20 moves in a range between a rightmost position 20a and a leftmost position 20b.

In this manner, the moving mechanism 24 transforms a rotation motion of the stepping motor 12 to a linear motion by a mechanism of the ball screw described above, so that the moveable stage 20 can move linearly. The moveable stage 20 slides while keeping a part of the moveable stage 20 in contact with a supporting plate 11, such that the moveable stage 20 does not rotate along with the rotation of the screw shaft 18. Thus, the moveable stage 20 moves without itself rotating.

On an upper surface of a main body portion of the moveable stage 20, the antenna 22 is fixed so that a reading surface of the antenna 22 is facing the top board of the check-out counter 10. In this context, the reading surface of the antenna 20 refers to a signal radiating surface from which antenna 22 (e.g., a planar patch-type antenna) emits radio waves. Since the antenna 22 is provided in this manner, the antenna 22 emits radio waves from the reading surface toward the top board of the check-out counter 10. Then, the antenna 22 is moved along the screw shaft 18 integrally with the moveable stage 20.

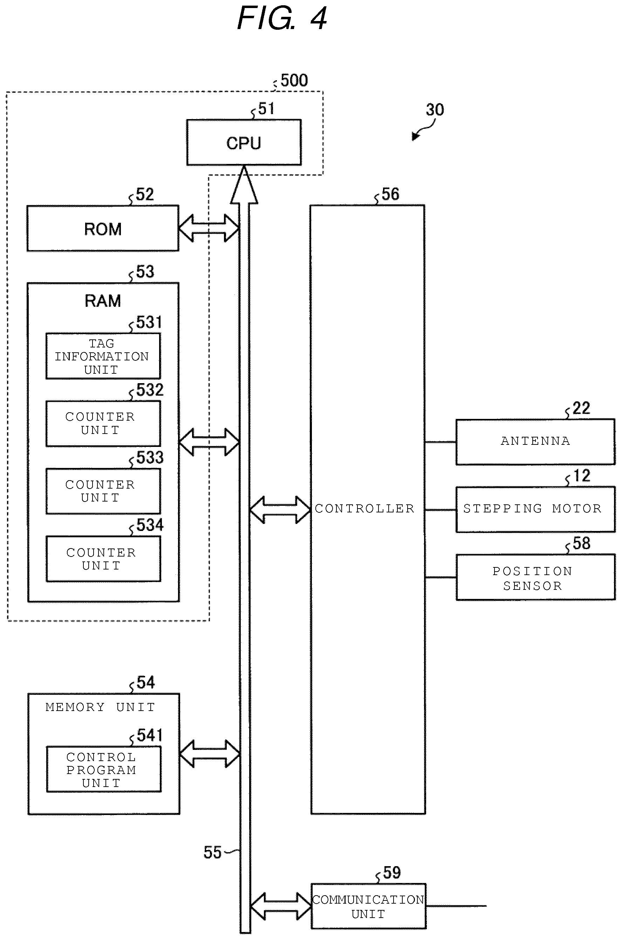

The reading device 30 may include a position sensor 58 (see Fig. 4) along the path of the moveable stage 20. The position sensor 58 can output a signal indicating the moveable stage 20 is located at a home position (e.g., a center position between positions of x = 0 and x = W). Here, the home position corresponds to a position of the moveable stage at which the antenna 22 is located at a central portion of the merchandise placement position. That is, when at the home position, the antenna 22 would be located proximate to a central portion of the merchandise placement position.

The reading device 30 may include the position sensor 58 (for example, a micro-switch, an optical sensor, or the like) at a start position and at an end position of the moveable stage 20. When the position sensor 58 detects the position of the moveable stage 20, a controller 500 (see Fig. 4) determines that the antenna 22 is located at the home position and acts to stop the movement of the moveable stage 20. Accordingly, the reading device 30 can more reliably perform positioning of the moveable stage 20 and thus positioning of the antenna 22 when a position sensor 58 is provided.

With the configuration of the moving mechanism 24 described above, if the stepping motor 12 rotates in a first direction, the moveable stage 20 moves on the screw shaft 18 in the direction of the arrow R2 in Fig. 2 and if the stepping motor 12 rotates in a second direction (reverse of the first direction), the moveable stage 20 moves on the screw shaft 18 in the direction of the arrow R1 in Fig. 2. The antenna 22 moves integrally with the moveable stage 20 with the reading surface of antenna 22 facing upward towards the top board of the checkout counter 10. With this movement, the antenna 22 can communicate with the wireless tag(s) T while the position of the antenna 22 with respect to the wireless tag(s) T is changing (that is, changing the location of the reading area of the antenna 22 with respect to the wireless tag(s) T.

Hereinafter, hardware configurations of the POS terminal 1 and the reading device 30 will be described. Fig. 3 is a block diagram illustrating the hardware configuration of the POS terminal 1. As illustrated in Fig. 3, the POS terminal 1 includes a Central Processing Unit (CPU) 41, a Read Only Memory (ROM) 42, a Random Access Memory (RAM) 43, the memory unit 44, and the like. The CPU 41 is a control main body of the POS terminal 1. The ROM 42 stores various programs. The RAM 43 develops various programs and various data. The memory unit 44 stores various programs. The CPU 41, the ROM 42, the RAM 43, and the memory unit 44 are connected with each other via a bus 45. The CPU 41, the ROM 42, and the RAM 43 constitute the controller 400. The controller 400 executes a control program which is stored in the ROM 42 or the memory unit 44 and uses the RAM 43 as a working area.

The RAM 43 includes the merchandise information unit 431. The merchandise information unit 431 obtains and stores merchandise information (merchandise name, merchandise price, and the like) of the merchandise M subjected to the sales registration processing corresponding to a merchandise code obtained from the code symbol read by the code reader 6 or a merchandise code input from the reading device 30.

The memory unit 44 includes a nonvolatile memory such as a Hard Disk Drive (HDD) or a flash memory which holds stored information even if power is turned off. The memory unit 44 includes a control program unit 441 which stores a control program.

The controller 400 is connected to the operation unit 5, the salesperson display unit 3, the customer display unit 4, the printer 8, the code reader 6, and the card reader 7 via the bus 45 and a controller 46. The operation unit 5 includes a start key 511 for instructing the reading device 30 to start receiving tag information and a settlement key 512 for ending a transaction with a customer. Upon receiving an instruction from the controller 400, the controller 46 controls the operation unit 5, the salesperson display unit 3, the customer display unit 4, the printer 8, the code reader 6, and the card reader 7. For convenience of explanation, it is assumed that the controller 400 performs control performed by the controller 46.

The controller 400 is connected with a communication unit 47 via the bus 45. The communication unit 47 is electrically connected to a communication unit 59 (see Fig. 4) of the reading device 30 via a communication line.

Fig. 4 is a block diagram illustrating the hardware configuration of the reading device 30. As illustrated in Fig. 4, the reading device 30 includes a CPU 51, a ROM 52, a RAM 53, a memory unit 54, and the like. The CPU 51 is a control main body of the reading device 30. The ROM 52 stores various programs. The RAM 53 develops various programs or various data. The memory unit 54 stores various programs. The CPU 51, the ROM 52, the RAM 53, and the memory unit 54 are connected with each other via a bus 55. The CPU 51, the ROM 52, and the RAM 53 constitute the controller 500. The controller 500 executes a control program which is stored in the ROM 52 or the memory unit 54 and uses the RAM 53 as a working area.

The RAM 53 includes a tag information unit 531, a counter unit 532, a counter unit 533, and a counter unit 534. The tag information unit 531 stores tag information (e.g., a tag ID and a merchandise code) received from the wireless tag T. The counter unit 532 stores a number X of times radio waves are transmitted from the antenna 22 without receiving any tag information while the antenna 22 remains at the home position. The counter unit 533 stores the number of cycles for later transmitting writing information to the wireless tag from the antenna 22. Specifically, in a first cycle, the reading device 30 will transmit writing information to each of the wireless tags T from which the antenna 22 has not yet received response information after a first reading attempt. In a second cycle, the reading device 30 will again transmit the writing information to each of the wireless tags T from which the antenna 22 has not yet received the response information after a second reading attempt. The same manner is also applied to a third cycle. Here, the number of cycles refers to the number of this reading-writing cycle (e.g., 1, 2 or 3). While the antenna 22 moves in a range from x = 0 to x = W, the counter unit 534 stores the number of cycles.

The memory unit 54 includes a nonvolatile memory such as an HDD or a flash memory which holds stored information even if power is turned off. The memory unit 54 includes a control program unit 541 which stores a control program.

The controller 500 is connected to the antenna 22, the stepping motor 12, and the position sensor 58 via the bus 55 and a controller 56.

The controller 500 is connected to the communication unit 59 via the bus 55. The communication unit 59 is electrically connected to a communication unit 47 of the POS terminal 1 via a communication line.

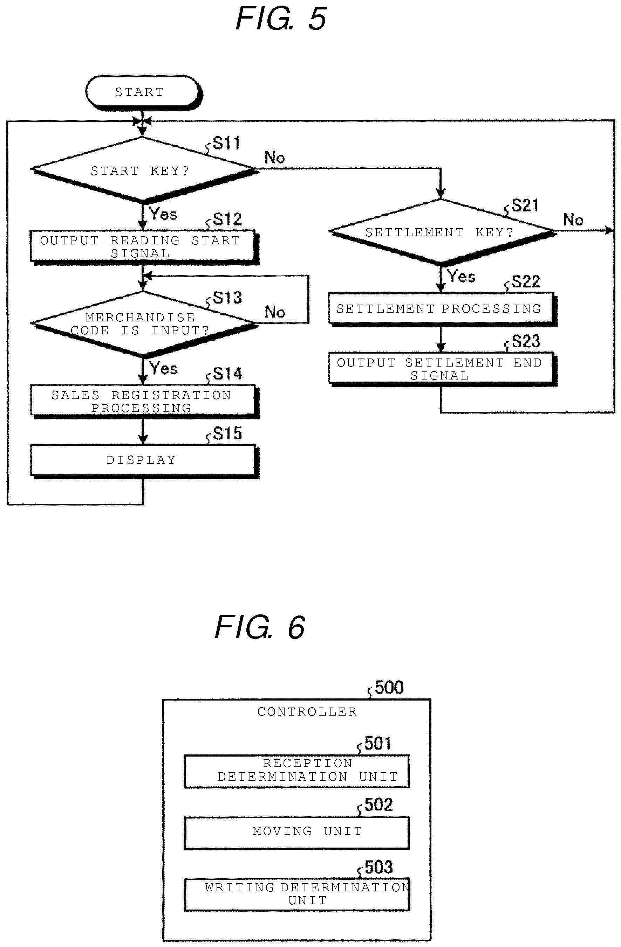

Hereinafter, control processes by the POS terminal 1 and the reading device 30 will be described. Fig. 5 is a flowchart illustrating control processing of the POS terminal 1. As illustrated in Fig. 5, the controller 400 of the POS terminal 1 determines whether or not the start key 511 of the operation unit 5 is pressed (S11). When the start key 511 is pressed (Yes in S11), the controller 400 outputs a reading start signal to the reading device 30 (S12). When the reading start signal is received, the reading device 30 transmits a radio wave to a set of all wireless tags T placed in the reading area for reading tag information, receives tag information from a subset of wireless tags T which have responded, and stores the tag information received from the subset of wireless tags T which have responded. Then, the reading device 30 outputs the merchandise code included in the stored tag information to the POS terminal 1.

The controller 400 determines whether or not a merchandise code has been input from the reading device 30 (S13). When the controller 400 waits until the merchandise code is input (No in S13) and determines that the merchandise code has been input (Yes in S13), the controller 400 reads merchandise information (merchandise name, price, or the like) of the merchandise M corresponding to the merchandise code input into the POS terminal 1 and registers the sales of the merchandise M. Specifically, the controller 400 registers the merchandise code stored in the merchandise information unit 431 (S14). In this case, in S13, the merchandise code is input together with merchandise codes of other items of the merchandise M corresponding to the subset of wireless tags which have responded, transmitted from the reading device 30 in S57 described below. Thus, the controller 400 simultaneously registers the merchandise codes of the articles of the merchandise M corresponding to the subset of wireless tags which have responded. Then, the controller 400 displays the merchandise information of each item of the merchandise M including a merchandise name or a merchandise price on the salesperson display unit 3 and the customer display unit 4 and completes a sales registration processing (S15). The controller 400 returns to S11.

In S11, when the start key 511 is not pressed (No in S11), the controller 400 determines whether or not the settlement key 512 is pressed (S21). When the settlement key 512 is pressed (Yes in S21), the controller 400 executes a settlement processing based on the merchandise information stored in the merchandise information unit 431 (S22). Then, the controller 400 outputs a settlement end signal showing that settlement processing of the merchandise M of the merchandise code input in S13 ends to the reading device 30 (S23). The controller 400 returns to S11. In S23, the controller 400 may output the merchandise code of the merchandise M subjected to a settlement processing instead of the settlement end signal to the reading device 30. In addition, in a case where the settlement key 512 has not yet been pressed (No in S21), the controller 400 returns to S11.

Hereinafter, control of the reading device 30 will be described in detail. Fig. 6 is a block diagram illustrating a configuration of the reading device 30. The controller 500 performs functions corresponding to a reception determination unit 501, a moving control unit 502, and a writing determination unit 503 by following a control program stored in the control program unit 541 of the ROM 52 or the memory unit 54.

The reception determination unit 501 determines whether or not the antenna 22 has received tag information.

The moving control unit 502 drives the moving mechanism 24 for moving the antenna 22 on a condition that the reception determination unit 501 determines that new tag information has not been received.

The writing determination unit 503 determines whether or not there is a wireless tag T from which response information has been indicating that the wireless tag T successfully stores the write information transmitted from the antenna 22.

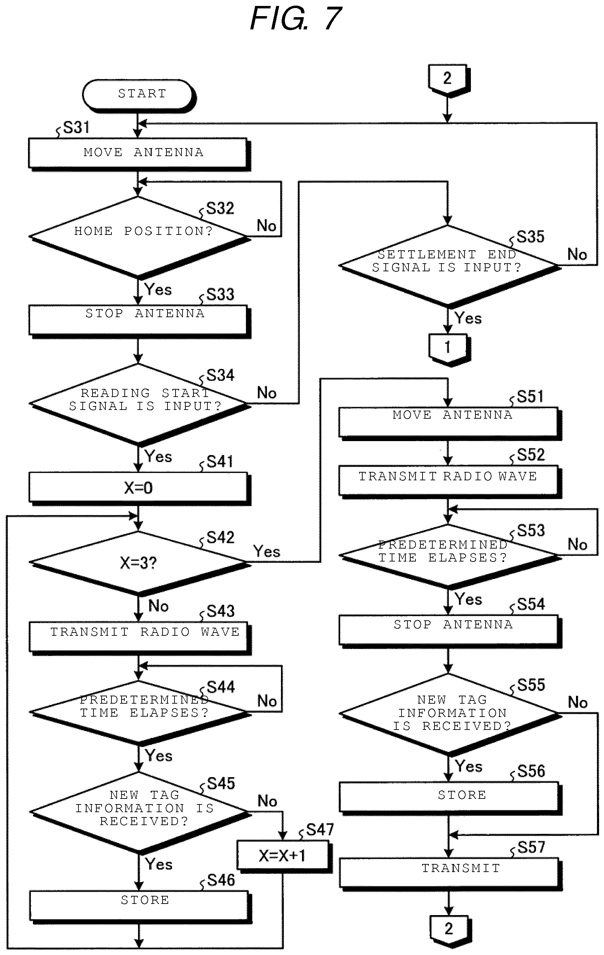

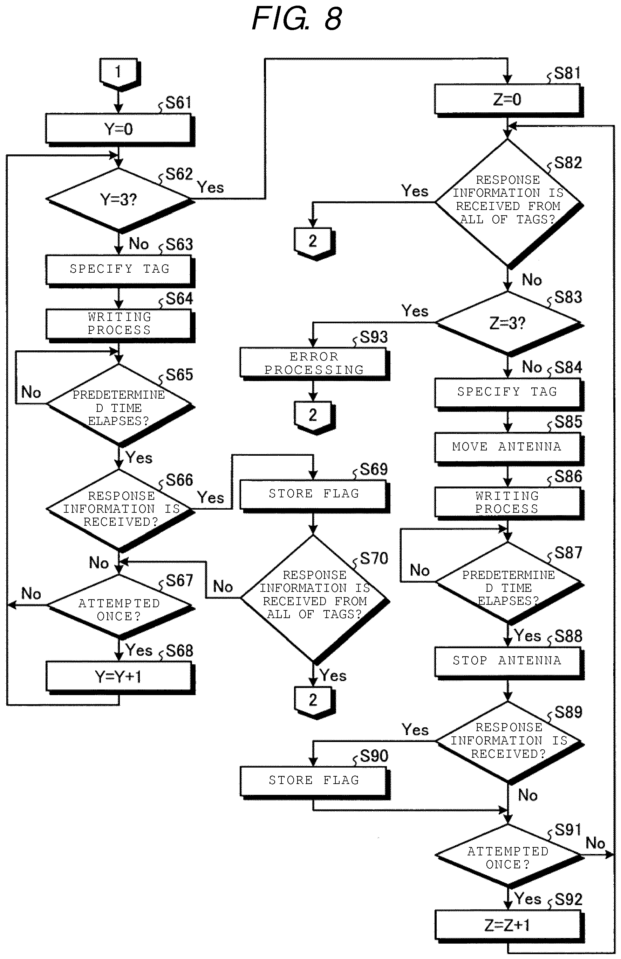

The control processing of the reading device 30 will be described. Fig. 7 is a flowchart illustrating aspects of a process, executed by the reading device 30, in which tag information is received from the wireless tag T and stored. Fig. 8 is a flowchart illustrating aspects of a control process executed by the reading device 30. As illustrated in Fig. 7, the controller 500 controls movement of the antenna 22 toward the home position by driving the stepping motor 12 which causes the moving mechanism 24 to move the moveable stage 20 (S31). Next, the controller 500 determines whether or not the antenna 22 reaches the home position (S32). When the position sensor 58 detects the position of the moveable stage 20, the controller 500 determines that the antenna 22 has reached the home position. When the controller 500 waits until the antenna 22 reaches the home position (No in S32) and determines that the antenna 22 has reached the home position (Yes in S32), the controller 500 stops movement of the antenna 22 (S33).

Next, the controller 500 determines whether or not the reading start signal (output by the processing of the POS terminal 1 in S12) has been received (S34). When the reading start signal has been received(Yes in S34), the controller 500 stores X = 0 in the counter unit 532 (S41). Next, the controller 500 (e.g., a reception determination unit 501) determines whether or not the number X stored in the counter unit 532 is "3" (S42). When it is determined that X is not "3" (No in S42), the controller 500 transmits a radio wave from the antenna 22 (S43). Since the reading device 30 requires a finite period of time to receive tag information from the wireless tag T, the controller 500 determines whether or not a predetermined time (for example, 2 seconds) has elapsed (S44). When the controller 500 waits until the predetermined time elapses (No in S44) and determines that the predetermined time has elapsed (Yes in S44), the controller 500 determines whether or not new tag information has been received (S45). When the new tag information is received (Yes in S45), the controller 500 stores the newly received tag information in the tag information unit 531 (S46). The controller 500 returns to S42.

In S45, when it is determined that the new tag information is not received (No in S45), the controller 500 increases the number X stored in the counter unit 532 by +1 (S47). The controller 500 returns to S42. That is, when the new tag information is received, the controller 500 repeats the cycle of transmission and reception processing of tag information without counting up the number X of the counter unit 532. When the new tag information is not received, the controller 500 increases the number X of the counter unit 532 by +1 and transmits a radio wave again.

In S42, when it is determined that the number X stored in the counter unit 532 is "3" (that is, the reception determination unit 501 determines that new tag information has not been received after three cycles) (Yes in S42), the controller 500 (in particular, moving control unit 502) initiates movement of the antenna 22 from its home position (S51). The antenna 22 moves in a range from x = 0 to x = W. The controller 500 executes processing of transmitting a radio wave to the wireless tag(s) T attached to the merchandise M placed on the check-out counter 10 (S52). That is, when the number of times new tag information is not read equals 3 times, the controller 500 determines that it will be difficult to receive further tag information with the antenna 22 located at the home position. Thus, the controller 500 causes the antenna 22 to move away from the home position and starts the process of transmitting a radio wave to and receiving tag information from the wireless tag T while changing a relative position of the antenna 22 to the wireless tag T by moving the antenna 22. Then, the controller 500 determines whether or not a predetermined time has elapsed (S53). The predetermined time in S53 is, for example, a time required for the antenna 22 to reciprocate once in the range from x = 0 to x = W. The predetermined time in S53 may be, for example, any arbitrary time, for example, a time period required for the antenna 22 reciprocate twice or three times in the range from x = 0 to x = W, or any other time period.

After the controller 500 waits until the predetermined time elapses (No in S53) and then determines that the predetermined time has elapsed (Yes in S53), the controller 500 stops movement of the antenna 22 (S54). Then, the controller 500 determines whether or not new tag information has been received (S55). When the new tag information has been received (Yes in S55), the controller 500 stores the tag information determined to be newly received in the tag information unit 531 (S56). Then, the controller 500 transmits the merchandise codes included in the stored tag information corresponding to the subset of wireless tags that have been read to the POS terminal 1 (S57). The controller 500 returns to S31. When it is determined that the new tag information has not been received (No in S55), the controller 500 executes processing of S57 instead of S56.

In S34, when it is determined that a reading start signal has not been input (No in S34), the controller 500 determines whether or not a settlement end signal (output by the processing of the POS terminal 1 in S23) has been received(S35). When it is determined that the settlement end signal has been received, the controller 500 returns to S31.

Writing of tag information will be described with reference to Fig. 8. When the settlement end signal is input (Yes in S35), the controller 500 sets a number Y to be "0" stored in the counter unit 533 (S61). At this time, the controller 500 executes processing in S31 to S33 to move the antenna 22 to the home position. Next, the controller 500 (in particular, the writing determination unit 503) determines whether or not the number Y stored in the counter unit 533 is "3" (that is, there is a tag from which response information has not been received yet) (S62). When the writing determination unit 503 determines that there are wireless tags T from which response information has not been received, those wireless tags T do not store write information. When the number Y stored in the counter unit 533 is not "3" (No in S62), the controller 500 specifies one wireless tag among the subset of the wireless tags for which tag information stored in the tag information unit 531 (S63). For example, the controller 500 specifies one wireless tag T in the order that is stored in the tag information unit 531.

Next, the controller 500 executes a writing process of transmitting information including writing information indicating that settlement processing related to the article of the merchandise M to which the specified wireless tag T is attached ends (S64). This information also includes a tag ID specifying the wireless tag T. When receiving the information from the reading device 30, the wireless tag T specified by the tag ID stores writing information indicating that the settlement processing for the specified wireless tag T has been completed. The wireless tag T transmits response information indicating that the writing information is stored in the specified wireless tag T to the reading device 30.

The controller 500 determines whether or not a predetermined time has elapsed after the processing in S64 (S65). Since the wireless tag T requires a finite period of time to receive information from the reading device 30 and transmit response information, the controller 500 determines whether or not a predetermined time has elapsed. The predetermined time in S65 is longer than the predetermined time in S44 (for example, 3 seconds). After the controller 500 waits until the predetermined time elapses (No in S65) and determines that the predetermined time has elapsed (Yes in S65), the controller 500 determines whether or not response information has been received from specified wireless tag T (S66). When it is determined that the response information has been received (Yes in S66), the controller 500 stores a flag indicating that response information has been received (that is, information indicating that settlement processing has completed successfully is stored in the wireless tag T) corresponding to the specified wireless tag T stored in the tag information unit 531 (S69).

Next, the controller 500 determines whether or not response information has been received from all of wireless tags T by reference to the completion flag stored in the tag information unit 531 (S70). That is, the controller 500 determines whether or not there are wireless tags in which writing information has not yet been stored. When the response information has been received from all of the wireless tags T (Yes in S70), the controller 500 returns to S31.

In S66, when the response information has been not received from a specified wireless tag T (No in S66), the controller 500 determines whether or not the process of specifying the wireless tag T in S63 has been previously attempted (S67). When the process of specifying the wireless tag T has not just been attempted (No in S67), the controller 500 returns to S62 and specifies a next wireless tag T in S63. When the wireless tag T has been previously attempted (Yes in S67), the controller 500 increases the number Y stored in the counter unit 533 by +1 (S68). Then, the controller 500 returns to S62 and attempts a specifying process of wireless tag T as a second cycle in S63. In the second cycle and the following cycles, processing of S63 to S70 is executed only for the wireless tag(s) T for which a completion flag has not been stored in the tag information unit 531. In S70, when it is determined that the response information has not been received from all of the wireless tags T (No in S70), the controller 500 executes the processing in S67 and so forth.

In S62, when it is determined that the number Y stored in the counter unit 533 is "3" (that is, there are wireless tags from which response information has not been received) (Yes in S62), the controller 500 sets a number Z to be "0" stored in the counter unit 534 (S81). Next, the controller 500 determines whether or not response information is received from all of wireless tags T by reference to the completion flag stored in the tag information unit 531 (S82). When the response information has been received from all of the wireless tags T (Yes in S82), the controller 500 returns to S31. When it is determined that the response information has not been received from all of the wireless tags T (No in S82), the controller 500 determines whether or not the number Z stored in the counter unit 534 is "3" (S83). When the number Z stored in the counter unit 534 is not "3" (No in S83), the controller 500 specifies one wireless tag for which the completion flag has not been stored from among the wireless tags for which tag information has been stored in the tag information unit 531 (S84).

Next, the controller 500 controls movement of the antenna 22 away from its home position (S85). The antenna 22 moves in a range from x = 0 to x = W. The controller 500 executes writing processing to the wireless tag T specified in S84 (S86). Then, the controller 500 determines whether or not a predetermined time has elapsed (S87). The controller 500 waits for predetermined time to elapse (No in S87) and once it has been determined that the predetermined time has elapsed (Yes in S87), the controller 500 stops movement of the antenna 22 (S88).

Next, the controller 500 determines whether or not response information has been received from the specified wireless tag T (S89). When it is determined that the response information has been received (Yes in S89), the controller 500 stores a completion flag in the tag information unit 531 indicating that response information has been received from the specified wireless tag T(S90).

Next, the controller 500 determines whether or not the process of specifying the wireless tag T in S84 has been attempted once (S91). In addition, when the specifying process of the wireless tag T has not been attempted (No in S91), the controller 500 returns to S82 and specifies next wireless tag T in S84. On the other hand, in a case where specifying of the wireless tag T was attempted (Yes in S91), the controller 500 increases the number Z stored in the counter unit 534 by +1 (S92). Then, the controller 500 returns to S82 and specifies a wireless tag T as a second cycle while moving the antenna 22 in S84. In the second cycle and the following cycles, processing of S83 to S92 is executed only for the wireless tag T of which a flag has not been stored in the tag information unit 531. In S89, when it is determined that the response information has not been received (No in S89), the controller 500 executes determination processing in S91.

In S83, when it is determined that the number Z stored in the counter unit 534 is "3" (Yes in S83), the controller 500 executes error processing of showing that response information has not been received from the specified wireless tag T (S93). The controller 500 returns to S31.

That is, while the antenna 22 remains at the home position, the controller 500 attempts three times the processing of transmitting information including writing information to the specified wireless tags T. Then, when information of a settlement end has not been written to all of the specified wireless tags T, the controller 500 tries to attempts the processing of transmitting information including writing information to the specified wireless tags T for three times while moving the antenna 22. That is, when the controller 500 determines that information indicating an end of settlement processing cannot be written to the wireless tag(s) T when the antenna 22 remains at the home position, the controller 500 transmits information including writing information while changing a relative position of the antenna 22 to the wireless tag T by moving the antenna 22.

As described above, in the reading device 30 of the embodiment, the controller 500 receives tag information stored in the wireless tag T while the antenna 22 is stopped. When it is determined that new tag information has not been received, the controller 500 then controls movement of the antenna 22 so that it can receive tag information. Thus, the tag information which cannot be received when the antenna 22 is stopped can be received, and it is possible to more reliably read the tag information.

In addition, in the reading device 30 of the embodiment, writing information is transmitted to the wireless tags T while the antenna 22 is stopped. But then, if the writing information cannot be written to all of the specified wireless tags T, the controller 500 transmits the writing information to the wireless tags T while moving the antenna 22. For this reason, since the writing information which cannot be written when the antenna 22 is stopped may be written to the wireless tag T while the antenna 22 is moving (or moved), it is thus possible to more reliably write and confirm the writing information.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the framework of the inventions. The accompanying claims and their equivalents are intended to cover such forms or modifications as would fall within the scope and framework of the inventions.

In an example embodiment, tag information is received from a wireless tag T while the antenna 22 is moving. However, the present disclosure is not limited thereto. For example, the tag information may be received while the antenna 22 is temporarily stopped at some predetermined position or positions (for example, with antenna 22 moved by a predetermined incremental distance or a for a predetermined time increment). In addition, moving and stopping the antenna 22 for receiving the tag information may be repeated several times.

In an example embodiment, information is written to specific wireless tags T the antenna 22 is moving. However, the present disclosure is not limited thereto. The information may be written to the wireless tag while antenna 22 is temporarily stopped after being moved by some predetermined distance. In addition, moving and stopping the antenna 22 during the writing of information to the wireless tag(s) T may be repeated several times.

In addition, in an example embodiment, the reading device 30 receives tag information from a wireless tag T attached to an article of merchandise M being sold in a store, for example. However, the present disclosure is not limited thereto. For example, the reading device 30 may receive the tag information from the wireless tag T attached to an article other than merchandise being sold at store and the article may be, for example, a document.

A program executed by the reading device 30 according to the example embodiment is recorded and provided in a computer-readable recording medium such as a CD-ROM, a floppy disk (FD), a CD-R, or a Digital Versatile Disk (DVD) as a file in installable format or executable format.

The program executed by the reading device 30 according to an example embodiment may also be saved on a computer connected to a network such as the Internet and provided by downloading the program via a network. The program executed by the reading device 30 according to an example embodiment may also be provided and distributed via a network such as the Internet.

The program executed by the reading device 30 according to an example embodiment may be incorporated in advance in ROM or the like.

## Claims

1. A wireless tag reading device (30), comprising:
an antenna (22) for transmitting wireless signals to a wireless tag (T)to initiate reading of information stored in the wireless tag (T);
a moveable stage (20) connected to the antenna (22) and configured to move the antenna (22) from a first location to a second location during a reading process for reading the information from the wireless tag (T); and
a controller (500) configured to determine whether information has been received from the wireless tag (T) during the reading process with the moveable stage (20) at a first location,
**characterized in that** the controller (500) is further configured to:
count and store a number of times the wireless signals are transmitted from the antenna (22) without receiving any information from the wireless tag (T) while the antenna (22) remains at the first location, and
move the moveable stage (20) from the first location to the second location while transmitting the wireless signals if the stored number of times equals a predetermined number.

2. The wireless tag reading device according to claim 1, further comprising:
a wireless tag reader electrically coupled to the antenna to supply signals to the antenna and receive signals from the antenna that are used in reading the information from the wireless tag during the reading process.

3. The wireless tag reading device according to claim 1 or 2, wherein the moveable stage (20) has a movement range along a first direction from a first end to a second end, and the first position is at a middle portion of the movement range between the first and second ends along the first direction.

4. The wireless tag reading device according to any one of claims 1 to 3, wherein the controller (500) is configured to:
transmit to the wireless tag (T), via the antenna (22), flag information to be stored in the wireless tag (T) indicating completion of a settlement process,
determine whether or not the flag information has been stored in the wireless tag (T) according to reception, via the antenna (22), of a response signal from the wireless tag (T), and
move the moveable stage (20) when the response signal from the wireless tag (T) has not been received after a transmission of the flag information to the wireless tag (T).

5. The wireless tag reading device according to any one of claims 1 to 4, wherein the wireless tag (T) is an RFID tag.

6. The wireless tag reading device according to any one of claims 1 to 5, further comprising:
a check-out counter (10) upon which an article of merchandise (M) can be placed, wherein
the antenna and the moveable stage are disposed below the check-out counter.

7. The wireless tag reading device according to any one of claims 1 to 6, further comprising:
a point-of-sale terminal (1) configured to receive the information read from the wireless tag (T) during the reading process, wherein
the wireless tag (T) is attached to an article of merchandise (M).

8. A non-transitory computer readable medium storing program instructions that when executed by a wireless tag reading device (30) causes:
an antenna (22) to transmit wireless signals to a wireless tag (T) to initiate reading of information stored in the wireless tag (T);
a moveable stage (20) connected to the antenna (22) to move the antenna (22) from a first location to a second location during a reading process for reading the information from the wireless tag (T); and
a controller (500) to determine whether information has been received from the wireless tag (T) during the reading process with the moveable stage (20) at a first location, to count and store a number of times the wireless signals are transmitted from the antenna (22) without receiving any information from the wireless tag (T) while the antenna (22) remains at the first location, and to move the moveable stage (20) from the first location to the second location while transmitting the wireless signals if the stored number of times equals a predetermined number.

9. The non-transitory computer readable medium according to claim 8, further including program instructions that when executed by the wireless tag reading device (30) cause:
the antenna (22) to transmit signals to the wireless tag (T) while the moveable stage (20) is in motion between the first location and the second location.

10. The non-transitory computer readable medium according to claim 8 or 9, wherein the wireless tag reading device (30) comprises:
a wireless tag reader electrically coupled to the antenna (22) to supply signals to the antenna (22) and receive signals from the antenna (22) that are used in reading the information from the wireless tag (T) during the reading process.

11. The non-transitory computer readable medium according to any one of claims 8 to 10, wherein the moveable stage (20) has a movement range along a first direction from a first end to a second end, and the first position is at a middle portion of the movement range between the first and second ends along the first direction.

12. The non-transitory computer readable medium according to any one of claims 8 to 11, further including program instructions that when executed by the wireless tag reading device (30) cause the controller (500):
to transmit to the wireless tag (T), via the antenna (22), flag information to be stored in the wireless tag (T) indicating completion of a settlement process,
to determine whether or not the flag information has been stored in the wireless tag (T) according to reception, via the antenna (22), of a response signal from the wireless tag (T), and
to move the moveable stage (20) when the response signal from the wireless tag (T) has not been received after a transmission of the flag information to the wireless tag (T).

13. The non-transitory computer readable medium according to any one of claims 8 to 12, wherein the wireless tag (T) is an RFID tag.

## Patentansprüche

1. Drahtlose Etikett-Lesevorrichtung (30), umfassend:
eine Antenne (22) zum Senden von drahtlosen Signalen an ein drahtloses Etikett (T), um ein Auslesen von Informationen einzuleiten, die im drahtlosen Etikett (T) gespeichert sind;
ein bewegliches Gestell (20), das mit der Antenne (22) verbunden und zum Bewegen der Antenne (22) während eines Leseprozesses zum Auslesen der Informationen aus dem drahtlosen Etikett (T) von einer ersten Position in eine zweite Position ausgelegt ist; und
eine Steuerung (500), die so ausgelegt ist, dass sie mit dem beweglichen Gestell (20) in einer ersten Position während des Leseprozesses bestimmt, ob Informationen vom drahtlosen Etikett (T) empfangen wurden,
**dadurch gekennzeichnet, dass** die Steuerung (500) ferner ausgelegt ist zum:
Zählen und Speichern einer Anzahl von Malen, welche die drahtlosen Signale von der Antenne (22) ohne Empfangen jeglicher Informationen vom drahtlosen Etikett (T) gesendet werden, während die Antenne (22) in der ersten Position bleibt, und
Bewegen des beweglichen Gestells (20) während des Sendens der drahtlosen Signale von der ersten Position in die zweite Position, wenn die gespeicherte Anzahl von Malen einer vorbestimmten Anzahl gleicht.

2. Drahtlose Etikett-Lesevorrichtung nach Anspruch 1, ferner umfassend:
einen drahtlosen Etikett-Leser, der mit der Antenne elektrisch gekoppelt ist, um der Antenne Signale zuzuführen und Signale von der Antenne zu empfangen, die beim Auslesen der Informationen aus dem drahtlosen Etikett während des Leseprozesses verwendet werden.

3. Drahtlose Etikett-Lesevorrichtung nach Anspruch 1 oder 2, wobei das bewegliche Gestell (20) einen Bewegungsbereich entlang einer ersten Richtung von einem ersten Ende zu einem zweiten Ende aufweist, und die erste Position in einem mittleren Abschnitt des Bewegungsbereichs zwischen dem ersten und dem zweiten Ende entlang der ersten Richtung ist.

4. Drahtlose Etikett-Lesevorrichtung nach einem der Ansprüche 1 bis 3, wobei die Steuerung (500) ausgelegt ist zum:
Senden von Flag-Informationen, die im drahtlosen Etikett (T) gespeichert werden sollen und den Abschluss eines Abrechnungsprozesses angeben, über die Antenne (22) an das drahtlose Etikett (T),
Bestimmen, ob die Flag-Informationen im drahtlosen Etikett (T) gespeichert wurden oder nicht, gemäß einem Empfang eines Antwortsignals vom drahtlosen Etikett (T) über die Antenne (22), und
Bewegen des beweglichen Gestells (20), wenn das Antwortsignal vom drahtlosen Etikett (T) nach einem Senden der Flag-Informationen an das drahtlose Etikett (T) nicht empfangen wurde.

5. Drahtlose Etikett-Lesevorrichtung nach einem der Ansprüche 1 bis 4, wobei das drahtlose Etikett (T) ein RFID-Etikett ist.

6. Drahtlose Etikett-Lesevorrichtung nach einem der Ansprüche 1 bis 5, ferner umfassend:
einen Ladentisch (10), auf welchem ein Handelsartikel (M) platziert werden kann, wobei
die Antenne und das bewegliche Gestell unter dem Ladentisch angeordnet sind.

7. Drahtlose Etikett-Lesevorrichtung nach einem der Ansprüche 1 bis 6, ferner umfassend:
ein Kassenterminal (1), das zum Empfangen der Informationen ausgelegt ist, die während des Leseprozesses aus dem drahtlosen Etikett (T) ausgelesen werden, wobei
das drahtlose Etikett (T) an einem Handelsartikeln (M) angebracht ist.

8. Nicht-transitorisches computerlesbares Medium, das Programmanweisungen speichert, die bei Ausführung durch eine drahtlose Etikett-Lesevorrichtung (30) bewirken, dass:
eine Antenne (22) drahtlose Signale an ein drahtloses Etikett (T) sendet, um ein Auslesen von Informationen einzuleiten, die im drahtlosen Etikett (T) gespeichert sind;
ein bewegliches Gestell (20), das mit der Antenne (22) verbunden ist, die Antenne (22) während eines Leseprozesses zum Auslesen der Informationen aus dem drahtlosen Etikett (T) von einer ersten Position in eine zweite Position bewegt; und
eine Steuerung (500) mit dem beweglichen Gestell (20) in einer ersten Position während des Leseprozesses bestimmt, ob Informationen vom drahtlosen Etikett (T) empfangen wurden, eine Anzahl von Malen, welche die drahtlosen Signale von der Antenne (22) ohne Empfangen jeglicher Informationen vom drahtlosen Etikett (T) gesendet werden, während die Antenne (22) in der ersten Position bleibt, zählt und speichert und das bewegliche Gestell (20) während des Sendens der drahtlosen Signale von der ersten Position in die zweite Position bewegt, wenn die gespeicherte Anzahl von Malen einer vorbestimmten Anzahl gleicht.

9. Nicht-transitorisches computerlesbares Medium nach Anspruch 8, das ferner Programmanweisungen umfasst, die bei Ausführung durch die drahtlose Etikett-Lesevorrichtung (30) bewirken, dass:
die Antenne (22) Signale an das drahtlose Etikett (T) sendet, während das bewegliche Gestell (20) zwischen der ersten Position und der zweiten Position in Bewegung ist.

10. Nicht-transitorisches computerlesbares Medium nach Anspruch 8 oder 9, wobei die drahtlose Etikett-Lesevorrichtung (30) ferner umfasst:
einen drahtlosen Etikett-Leser, der mit der Antenne (22) elektrisch gekoppelt ist, um der Antenne (22) Signale zuzuführen und Signale von der Antenne (22) zu empfangen, die beim Auslesen der Informationen aus dem drahtlosen Etikett (T) während des Leseprozesses verwendet werden.

11. Nicht-transitorisches computerlesbares Medium nach einem der Ansprüche 8 bis 10, wobei das bewegliche Gestell (20) einen Bewegungsbereich entlang einer ersten Richtung von einem ersten Ende zu einem zweiten Ende aufweist, und die erste Position in einem mittleren Abschnitt des Bewegungsbereichs zwischen dem ersten und dem zweiten Ende entlang der ersten Richtung ist.

12. Nicht-transitorisches computerlesbares Medium nach einem der Ansprüche 8 bis 11, das ferner Programmanweisungen umfasst, die bei Ausführung durch die drahtlose Etikett-Lesevorrichtung (30) die Steuerung (500) veranlassen zum:
Senden von Flag-Informationen, die im drahtlosen Etikett (T) gespeichert werden sollen und den Abschluss eines Abrechnungsprozesses angeben, über die Antenne (22) an das drahtlose Etikett (T),
Bestimmen, ob die Flag-Informationen im drahtlosen Etikett (T) gespeichert wurden oder nicht, gemäß einem Empfang eines Antwortsignals vom drahtlosen Etikett (T) über die Antenne (22), und
Bewegen des beweglichen Gestells (20), wenn das Antwortsignal vom drahtlosen Etikett (T) nach dem Senden der Flag-Informationen an das drahtlose Etikett (T) nicht empfangen wurde.

13. Nicht-transitorisches computerlesbares Medium nach einem der Ansprüche 8 bis 12, wobei das drahtlose Etikett (T) ein RFID-Etikett ist.

## Revendications

1. Dispositif de lecture d'étiquettes sans fil (30), comprenant :
une antenne (22) destinée à transmettre des signaux sans fil à une étiquette sans fil (T) afin d'initier une lecture d'informations stockées dans l'étiquette sans fil (T) ;
un étage mobile (20) connecté à l'antenne (22) et configuré de manière à déplacer l'antenne (22), d'un premier emplacement à un second emplacement, au cours d'un processus de lecture pour lire les informations à partir de l'étiquette sans fil (T) ; et
un contrôleur (500) configuré de manière à déterminer si des informations ont été reçues en provenance de l'étiquette sans fil (T), au cours du processus de lecture, avec l'étage mobile (20) à un premier emplacement ;
**caractérisé en ce que** le contrôleur (500) est en outre configuré de manière à :
compter et stocker un nombre de fois où les signaux sans fil sont transmis à partir de l'antenne (22) sans recevoir d'informations en provenance de l'étiquette sans fil (T) tandis que l'antenne (22) reste au premier emplacement ; et
déplacer l'étage mobile (20), du premier emplacement au second emplacement, tout en transmettant les signaux sans fil, si le nombre de fois stocké est égal à un nombre prédéterminé.

2. Dispositif de lecture d'étiquettes sans fil selon la revendication 1, comprenant en outre :
un lecteur d'étiquettes sans fil couplé électriquement à l'antenne en vue de fournir des signaux à l'antenne et de recevoir des signaux en provenance de l'antenne, lesquels sont utilisés dans le cadre de la lecture des informations à partir de l'étiquette sans fil, au cours du processus de lecture.

3. Dispositif de lecture d'étiquettes sans fil selon la revendication 1 ou 2, dans lequel l'étage mobile (20) présente une plage de déplacement le long d'une première direction, d'une première extrémité à une seconde extrémité, et la première position se situe au niveau d'une partie médiane de la plage de déplacement entre les première et seconde extrémités le long de la première direction.

4. Dispositif de lecture d'étiquettes sans fil selon l'une quelconque des revendications 1 à 3, dans lequel le contrôleur (500) est configuré de manière à :
transmettre, à l'étiquette sans fil (T), par l'intermédiaire de l'antenne (22), des informations de drapeau à stocker dans l'étiquette sans fil (T), indiquant l'achèvement d'un processus de règlement ;
déterminer si les informations de drapeau ont été stockées ou non dans l'étiquette sans fil (T) selon la réception, par l'intermédiaire de l'antenne (22), d'un signal de réponse en provenance de l'étiquette sans fil (T) ; et
déplacer l'étage mobile (20) lorsque le signal de réponse en provenance de l'étiquette sans fil (T) n'a pas été reçu après une transmission des informations de drapeau à l'étiquette sans fil (T).

5. Dispositif de lecture d'étiquettes sans fil selon l'une quelconque des revendications 1 à 4, dans lequel l'étiquette sans fil (T) est une étiquette RFID.

6. Dispositif de lecture d'étiquettes sans fil selon l'une quelconque des revendications 1 à 5, comprenant en outre :
une caisse de sortie (10) sur laquelle un article de marchandise (M) peut être placé, dans lequel
l'antenne et l'étage mobile sont disposés sous la caisse de sortie.

7. Dispositif de lecture d'étiquettes sans fil selon l'une quelconque des revendications 1 à 6, comprenant en outre :
un terminal de point de vente (1) configuré de manière à recevoir les informations lues à partir de l'étiquette sans fil (T) au cours du processus de lecture, dans lequel
l'étiquette sans fil (T) est fixée à un article de marchandise (M).

8. Support non transitoire lisible par ordinateur stockant des instructions de programme qui, lorsqu'elles sont exécutées par un dispositif de lecture d'étiquettes sans fil (30), amènent :
une antenne (22) à transmettre des signaux sans fil à une étiquette sans fil (T) afin d'initier une lecture d'informations stockées dans l'étiquette sans fil (T) ;
un étage mobile (20) connecté à l'antenne (22) pour déplacer l'antenne (22), d'un premier emplacement à un second emplacement, au cours d'un processus de lecture pour lire les informations à partir de l'étiquette sans fil (T) ; et
un contrôleur (500) pour déterminer si des informations ont été reçues en provenance de l'étiquette sans fil (T), au cours du processus de lecture, avec l'étage mobile (20) à un premier emplacement, pour compter et stocker un nombre de fois où les signaux sans fil sont transmis à partir de l'antenne (22) sans recevoir d'informations en provenance de l'étiquette sans fil (T) tandis que l'antenne (22) reste au premier emplacement, et à déplacer l'étage mobile (20), du premier emplacement au second emplacement, tout en transmettant les signaux sans fil, si le nombre de fois stocké est égal à un nombre prédéterminé.

9. Support non transitoire lisible par ordinateur selon la revendication 8, incluant en outre des instructions de programme qui, lorsqu'elles sont exécutées par le dispositif de lecture d'étiquettes sans fil (30), amènent :
l'antenne (22) à transmettre des signaux à l'étiquette sans fil (T) tandis que l'étage mobile (20) se déplace entre le premier emplacement et le second emplacement.

10. Support non transitoire lisible par ordinateur selon la revendication 8 ou 9, dans lequel le dispositif de lecture d'étiquettes sans fil (30) comprend :
un lecteur d'étiquettes sans fil couplé électriquement à l'antenne (22) en vue de fournir des signaux à l'antenne (22) et de recevoir des signaux en provenance de l'antenne (22), lesquels sont utilisés dans le cadre de la lecture des informations à partir de l'étiquette sans fil (T), au cours du processus de lecture.

11. Support non transitoire lisible par ordinateur selon l'une quelconque des revendications 8 à 10, dans lequel l'étage mobile (20) présente une plage de déplacement le long d'une première direction, d'une première extrémité à une seconde extrémité, et la première position se situe au niveau d'une partie médiane de la plage de déplacement entre les première et seconde extrémités le long de la première direction.

12. Support non transitoire lisible par ordinateur selon l'une quelconque des revendications 8 à 11, incluant en outre des instructions de programme qui, lorsqu'elles sont exécutées par le dispositif de lecture d'étiquettes sans fil (30), amènent le contrôleur (500) à :
transmettre, à l'étiquette sans fil (T), par l'intermédiaire de l'antenne (22), des informations de drapeau à stocker dans l'étiquette sans fil (T), indiquant l'achèvement d'un processus de règlement ;
déterminer si les informations de drapeau ont été stockées ou non dans l'étiquette sans fil (T) selon la réception, par l'intermédiaire de l'antenne (22), d'un signal de réponse en provenance de l'étiquette sans fil (T) ; et
déplacer l'étage mobile (20) lorsque le signal de réponse en provenance de l'étiquette sans fil (T) n'a pas été reçu après une transmission des informations de drapeau à l'étiquette sans fil (T).

13. Support non transitoire lisible par ordinateur selon l'une quelconque des revendications 8 à 12, dans lequel l'étiquette sans fil (T) est une étiquette RFID.
